# EUROPÄISCHE PATENTSCHRIFT

(11) **EP 2 288 470 B1**
(45) Veröffentlichungstag und Bekanntmachung des Hinweises auf die Patenterteilung: **09.08.2017**
(21) Anmeldenummer: 09768598.6
(22) Anmeldetag: 20.05.2009
(51) Int. Cl.: B23K 9/32, B08B 7/00

(54) **VORRICHTUNG UND VERFAHREN ZUM REINIGEN VON SCHWEIßBRENNER**
METHOD AND APPARATUS FOR CLEANING WELDING TORCHES
PROCÉDÉ ET APPAREIL POUR NETTOYER LES TORCHES DE SOUDAGE

(30) Priorität: 24.06.2008 AT 10082008
(43) Veröffentlichungstag der Anmeldung: 02.03.2011
(73) Patentinhaber: Fronius International GmbH, 4643 Pettenbach (AT)
(72) Erfinder: LANGEDER, Harald, A-4643 Pettenbach (AT); EGLSEDER, Erich, A-4560 Kirchdorf/Krems (AT); ÖLLER, Wilhelm, A-3350 Haag (AT); BRUCKNER, Manfred, A-4550 Kremsmünster (AT)
(74) Vertreter: Sonn & Partner Patentanwälte
(86) Internationale Anmeldenummer: PCT/AT2009/000208
(87) Internationale Veröffentlichungsnummer: WO 2009/155623

(56) Entgegenhaltungen:
- WO-A1-01/64383
- WO-A1-2004/039528
- GB-A- 2 297 817
- JP-A- 1 078 679

## Beschreibung

Die Erfindung betrifft eine Reinigungsvorrichtung zum Reinigen von Schweißbrennern mit zumindest zwei Spulen und einer Öffnung zur Einbringung des Schweißbrenners zur elektromagnetischen Reinigung desselben, einer mit den Spulen verbundenen Versorgungseinrichtung und gegebenenfalls mit einer Vorrichtung zum Aufbringen von Reinigungsflüssigkeit an die Spitze, insbesondere eine Gasdüse, des Schweißbrenners, wobei bevorzugt alle Komponenten in einem gemeinsamen Gehäuse angeordnet und von einer Steuervorrichtung geregelt sind.

Weiters betrifft die Erfindung ein Verfahren zum Reinigen von Schweißbrennern, bei dem eine Spitze, insbesondere eine Gasdüse, des Schweißbrenners zur berührungslosen Entfernung von Verunreinigungen einem über zumindest zwei Spulen erzeugten elektromagnetischen Feld ausgesetzt wird, wobei gegebenenfalls vor der Reinigung auf die Spitze des Schweißbrenners Reinigungsflüssigkeit bzw. Benetzungsflüssigkeit aufgebracht wird.

Schweißbrenner werden während des Schweißvorganges durch Spritzer geschmolzenen Materials verunreinigt. Dabei lagern sich die Metallspritzer auch innerhalb der Gasdüse des Schweißbrenners ab und erstarren dort. In der Folge wird die Strömung des Schutzgases durch die Gasdüse durch die abgelagerten Metallspritzer gestört, sodass auch atmosphärische Luft an die Schweißstelle gelangen kann und somit der Schweißprozess negativ beeinflusst werden kann bzw. die Qualität der Schweißnaht verschlechtert wird. Für eine qualitativ hochwertige Schweißstelle ist daher ein einwandfrei funktionierender und möglichst sauberer Schweißbrenner wichtig.

Daher werden Schweißbrenner in regelmäßigen Abständen von den darauf befindlichen Metallspritzern gereinigt. Während der Reinigungszeit steht der Schweißbrenner für Schweißarbeiten jedoch nicht zur Verfügung. Daher wird angestrebt, die Reinigung möglichst rasch durchzuführen. Es existieren mechanische Verfahren zur Reinigung von Schweißbrennern, bei welchen mit Hilfe von Bürsten, Messern oder dgl. die Ablagerungen von der Spitze, insbesondere der Gasdüse, des Schweißbrenners entfernt werden. Mit derartigen mechanischen Reinigungsverfahren ist es jedoch nur begrenzt möglich, das Innere der Gasdüse des Schweißbrenners möglichst gut zu reinigen. Darüber hinaus werden die Bestandteile des Schweißbrenners durch die mechanischen Einwirkungen beschädigt und in der Folge deren Lebensdauer verkürzt. Durch die Beschädigung an der Oberfläche der Teile des Schweißbrenners haften die Schweißspritzer noch besser an, sodass ein rascheres Verlegen der Gasdüse die Folge ist und der Schweißbrenner somit öfter gereinigt bzw. die Gasdüse ausgetauscht werden muss. Weiters sollte der Schweißbrenner vor dem Reinigungsvorgang abgekühlt werden, was die Reinigungszeit wiederum erhöht.

Die US 4,838,287 A beschreibt beispielsweise ein Verfahren zur berührungslosen Reinigung von Schweißbrennern unter Verwendung einer mit elektrischem Strom durchflossenen Spule. Zu diesem Zweck wird die Spitze des Schweißbrenners in die Öffnung der Spule eingebracht und ein entsprechender Stromimpuls angelegt. Das resultierende elektromagnetische Feld bewirkt entsprechende magnetische Kräfte, die auch auf die Ablagerungen am Schweißbrenner wirken und diese somit entfernen. Dabei erfolgt die Entfernung ohne mechanische Einwirkung auf Teile des Schweißbrenners, weshalb diese geschont werden und somit deren Lebensdauer erhöht werden kann.

Um den Schweißbrenner vor der elektromagnetischen Reinigung einerseits abzukühlen und andererseits auch die Entfernung der Verunreinigung durch entsprechende Reinigungsmittel zu erleichtern, wird der Schweißbrenner üblicherweise in eine Flüssigkeit getaucht. Diese Flüssigkeit kann aus Wasser oder aus Mischungen von Wasser mit bestimmten Lösungsmitteln bestehen. Für eine effiziente elektromagnetische Reinigung ist es von Vorteil, wenn die Metallspritzer auf dem Schweißbrenner durch das Eintauchen in eine Reinigungsflüssigkeit rasch abgekühlt werden. Diese rasche Abkühlung bewirkt aufgrund der unterschiedlichen Wärmeausdehnung der Metallspritzer und der üblicherweise aus Kupfer bestehenden Gasdüse eine Verringerung der Haftung der Metallspritzer auf dem Schweißbrenner.

Eine Anordnung zur Reinigung von Schweißbrennern mit einer Wanne mit Flüssigkeit zum Eintauchen des Schweißbrenners und einer Spule zur elektromagnetischen Reinigung des Schweißbrenners wird beispielsweise in der WO 2001/56730 A2 beschrieben. Dabei ist eine Flüssigkeitswanne und ein die Spule enthaltender Ständer unmittelbar neben dem zu schweißenden Werkstück angeordnet, sodass der Schweißbrenner, welcher insbesondere auf einen Roboterarm montiert ist, auch automatisch zwischen den Schweißvorgängen gereinigt werden kann. Nachteilig dabei ist, dass auf dem Ständer beispielsweise Versorgungseinrichtungen für die Spule keinen Platz finden, sodass diese über entsprechende Leitungen verbunden werden müssen. Über diese Leitungen zwischen der Versorgungseinrichtung und der Reinigungseinheit können von den hohen Stromimpulsen herrührende elektromagnetische Felder übertragen werden, die zu Störungen von anderen Geräten oder Steuerungen führen können.

Weiters ist aus der EP 1 558 420 B1 eine Reinigungsvorrichtung zum berührungslosen Reinigen von Schweißbrennern über ein magnetisches Feld bekannt, bei dem die Spule für die magnetische Reinigung und ein Behälter für die Reinigungsflüssigkeit in einem gemeinsamen Gehäuse angeordnet sind, wobei über eine Öffnung im Gehäuse der Schweißbrenner in die Spule eingeführt werden kann. Im Gehäuse ist eine Versorgungseinheit angeordnet, sodass die Versorgung der Spule über möglichst kurze Leitungen erfolgt. Hierbei sind die Vorrichtung zum Aufbringen der Reinigungsflüssigkeit und die Spule zusammen mit einem unter der Spule angeordneten Abfallbehälter zur Aufnahme der elektromagnetisch abgereinigten Verunreinigungen in dem Gehäuse angeordnet. Weiters kann durch diese Anordnung das Aufbringen der Reinigungsflüssigkeit und das elektromagnetische Reinigen der Gasdüse im Wesentlichen in derselben Position des Schweißbrenners erfolgen.

Aus der WO 2005/97362 A ist eine Reinigungsvorrichtung zum Reinigen von Schweißbrennern mit einer Vorrichtung zur elektromagnetischen Reinigung des Schweißbrenners bekannt, welche eine Spule mit einer Öffnung zur Einbringung des Schweißbrenners zur elektromagnetischen Reinigung und eine Vorrichtung zum Aufbringen von Reinigungsflüssigkeit an die Spitze, insbesondere auf die Gasdüse, des Schweißbrenners aufweist, die in einem gemeinsamen Gehäuse angeordnet sind. Dabei ist in dem gemeinsamen Gehäuse zusätzlich eine zweite Vorrichtung zum Reinigen des Schweißbrenners angeordnet, welche ein kaltes Medium, insbesondere CO₂-Trockeneis, verwendet. Im gemeinsamen Gehäuse ist eine gemeinsame Steuervorrichtung, eine gemeinsame Ein-/Ausgabevorrichtung und eine gemeinsame Versorgungseinrichtung bzw. Stromquelle zur Steuerung, Einstellung und Energieversorgung der Reinigungsvorrichtung angeordnet.

Eine Vorrichtung zum elektromagnetischen Reinigen von Schweißbrennern der gegenständlichen Art ist aus der JP 1 078 679 A bekannt.

Die Aufgabe der vorliegenden Erfindung liegt darin, eine Vorrichtung und ein Verfahren zum Reinigen eines Schweißbrenners zu schaffen, wobei die Reinigungsqualität und der Reinigungsbereich erhöht werden kann.

Die Aufgabe der Erfindung wird dadurch gelöst, dass für die Reinigung des Schweißbrenners die Spulen unabhängig voneinander mit der Versorgungseinrichtung mit elektronischer Energie versorgbar sind, und eine Kühlvorrichtung zur Kühlung der Spulen angeordnet ist. Vorteilhaft ist hierbei, dass dadurch zumindest zwei aufeinanderfolgende magnetische Felder erzeugt werden, die zu einem gemeinsamen magnetischen Feld verschmelzen. Somit wird über einen längeren Zeitraum ein elektromagnetisches Feld erzeugt, das sich durch die Verwendung der zumindest zwei Spulen über einen weiteren Bereich erstreckt, wodurch ein größerer Reinigungsbereich für den Schweißbrenner geschaffen wird. Bei den bisher aus dem Stand der Technik bekannten magnetischen Reinigungsgeräten mit nur einer Spule ist es durch den kurzen verwendbaren Bereich der Kraftwirkung notwendig, zwei unterschiedliche Positionen für die Reinigung anzufahren. Dies führt einerseits zu einem erhöhten Programmieraufwand für die meistens verwendeten Schweißroboter und andererseits dazu dass immer nur ein Teilbereich des Brenners gereinigt wird. Durch den größeren nutzbaren Reinigungsbereich bei Verwendung von zumindest zwei Spulen kann der gesamte Innenraum des Schweißbrenners mit nur einer Reinigungsposition gereinigt werden. Die Reinigungseffizienz wird dadurch zumindest verdoppelt, die Inbetriebnahme, Justierung und Programmierung wesentlich vereinfacht und die Möglichkeit der Fehlbedingung auf ein Minimum reduziert.

Durch die Kühlvorrichtung zur Kühlung der Spulen kann die bei einem Reinigungsprozess durch das Magnetfeld entstehende Wärme von den Spulen weggeleitet und somit ein längerer Betrieb der Reinigungsvorrichtung ermöglicht werden.

Von Vorteil ist eine Ausgestaltung, bei der die Spulen unter Zwischenschaltung eines Schaltelementes mit einem oder mehreren Kondensatoren der Versorgungseinrichtung verbunden sind. Dadurch können die Spulen in kürzester Zeit mit hoher Energie versorgt werden und somit ein rascher Aufbau eines Magnetfeldes erzielt werden.

Vorteilhafterweise sind die Kondensatoren direkt mit dem Ausgang eines kurzschlussfesten Transformators verbunden. Dadurch kann ein einfacher und kostengünstiger Aufbau zum Laden der Kondensatoren und gleichzeitig eine galvanische Trennung geschaffen werden.

Die Kühlvorrichtung kann zwischen den Spulen angeordnet sein.

Wenn die Kühlvorrichtung in zumindest einer Spule integriert ist, kann eine noch bessere Wärmeabführung und Kühlung der Spulen erreicht und somit ein Hitzestau im Inneren der Spulen vermieden werden.

Die Kühlvorrichtung kann durch Kühlleitbleche oder Wärmerohre, insbesondere sogenannte Heat-Pipe's, gebildet sein, die mit dem Gehäuse verbunden sind. Dadurch kann die Wärme auf das Gehäuse, welches bevorzugt gut wärmeleitfähig ausgebildet ist, übertragen und somit eine große Fläche zur Abgabe der Wärme verwendet werden.

Wenn zumindest eine Spule mit zumindest einem Temperatursensor ausgestattet ist, kann der Temperaturverlauf in den Spulen überwacht werden. In der Folge können entsprechende Maßnahmen ergriffen werden, sodass Schäden aufgrund von zu großer Hitzeentwicklung verhindert werden können.

Um Störungen bei anderen Geräten im Umfeld der Reinigungsvorrichtung zu vermeiden, ist das Gehäuse vorzugsweise zur Abschirmung der von den Spulen erzeugten elektromagnetischen Felder im Wesentlichen geschlossen.

Eine Ausgestaltung, bei der das Gehäuse ohne Zwangskühlung und Kühlungsöffnungen auskommt, und abgedichtet ist, sodass das Innere des Gehäuses vor Verschmutzung geschützt ist, ist von Vorteil, da dadurch Störungen, die oftmals durch eindringenden Schmutz verursacht werden, vermieden werden können.

Wenn die Spulen zusätzliche magnetische Leitbleche aufweisen, kann das Magnetfeld punktuell konzentriert verstärkt werden, da dadurch in einem bestimmten Bereich eine Erhöhung des Magnetfeldes erreicht wird und somit eine verbesserte Reinigung des Schweißbrenners ermöglicht wird. Zusätzlich können derartige magnetische Leitbleche dazu verwendet werden, das Magnetfeld über einen größeren Bereich auszugleichen und somit ein homogeneres Feld zu erreichen, um über den gesamten Bereich eine gleich gute Reinigung zu erzielen.

Die Aufgabe der Erfindung wird in verfahrensmäßiger Hinsicht dadurch gelöst, dass die erste Spule zum Erzeugen eines elektromagnetischen Feldes nach der zumindest einen weiteren Spule mit elektrischer Energie versorgt wird. Durch Variation der Zeit zwischen dem Beaufschlagen der zumindest einen weiteren und der ersten Spule mit Energie kann das elektromagnetische Feld in räumlicher und zeitlicher Hinsicht verändert werden. Dies erlaubt eine optimale Anpassung an die Geometrie und das durch die Gasdüse verursachte magnetische Abschirmverhalten des Schweißbrenners. Ein wesentlicher Vorteil liegt auch darin, dass durch Verwendung von zumindest zwei Spulen die einzelnen Wicklungen kürzer gewählt werden können. Dies führt zu einer höheren magnetischen Flussdichte und in Folge zu einer höheren Kraftwirkung auf die Verunreinigungen im Schweißbrenner. Dadurch dass das aus zumindest zwei Spulen resultierende Magnetfeld über einen längeren Zeitraum auf hohem Niveau bleibt, kann die feldabschirmende Wirkung der normalerweise verwendeten Kupfergasdüse besser überwunden werden, was zu einer höheren Reinigungswirkung im Inneren des Schweißbrenners führt.

Vorzugsweise wird die erste Spule mit elektrischer Energie versorgt, während die Versorgung der zumindest einen weiteren Spule mit elektrischer Energie aufrecht erhalten bleibt.

Vorteilhafterweise wird die erste Spule 1-3ms, insbesondere 1.5ms, nach der zumindest einen weiteren Spule mit elektrischer Energie versorgt. Dadurch wird erreicht, dass die von den Spulen erzeugten Magnetfelder zu einem gemeinsamen Magnetfeld verschmelzen und dadurch der Reinigungsbereich vergrößert wird.

Die vorliegende Erfindung wird anhand der beigefügten, schematischen Zeichnungen näher erläutert. Darin zeigen:
Fig. 1 eine schaubildliche Darstellung einer Reinigungsvorrichtung, in vereinfachter, schematischer Darstellung;
Fig. 2 eine schematische Darstellung der Reinigungsvorrichtung mit allen wesentlichen Komponenten in Seitenansicht; und
Fig. 3 eine vereinfachte Darstellung des für einen Reinigungsprozess entstehenden Magnetfeldes.

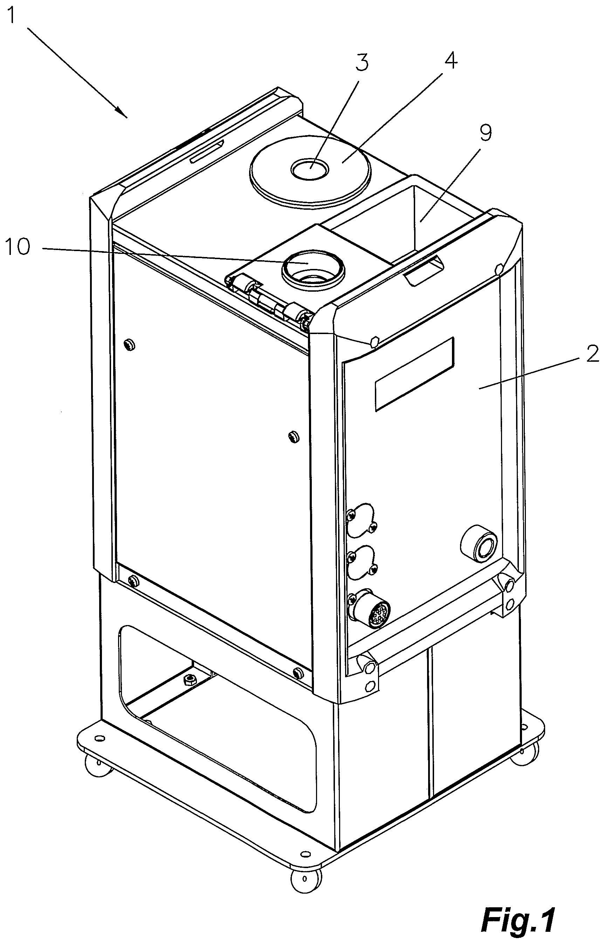

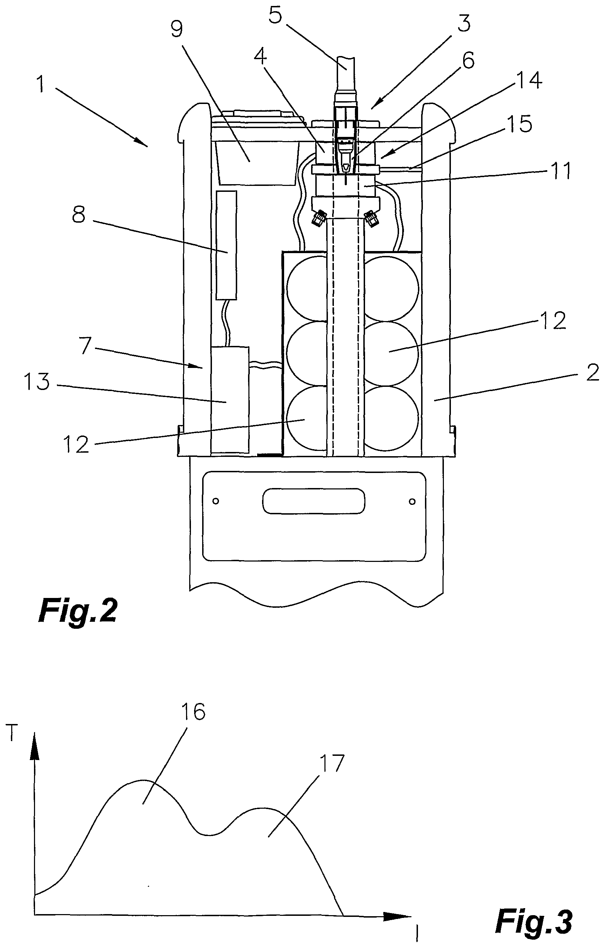

In den Fig. 1 bis 3 ist eine Reinigungsvorrichtung 1 dargestellt, welche ein Gehäuse 2 umfasst, in dem alle für die Reinigungsvorrichtung 1 notwendigen Komponenten angeordnet sind. Hierzu ist zu erwähnen, dass die in Fig. 2 dargestellten einzelnen Komponenten miteinander verbunden sind, wobei hierzu der Übersicht halber nur eine Linie bzw. Leitung eingezeichnet ist.

Im Gehäuse 2 ist eine Öffnung 3 angeordnet, welcher Öffnung 3 eine Spule 4 zugeordnet ist, sodass über die Öffnung 3 ein Schweißbrenner 5, insbesondere eine Spitze bzw. die Gasdüse 6 des Schweißbrenners 5, in die Spule 4 eingeführt werden kann, worauf eine elektromagnetische Reinigung durchgeführt werden kann. Mit der Spule 4 ist eine Versorgungseinrichtung 7 verbunden, welche zur Ansteuerung mit einer Steuervorrichtung 8 verbunden ist. Selbstverständlich können die Versorgungseinrichtung 7 und die Steuervorrichtung 8 auch eine gemeinsame Baueinheit bilden. Zusätzlich kann die Reinigungsvorrichtung 1 mit einer Vorrichtung zum Aufbringen einer Reinigungsflüssigkeit bzw. Benetzungsflüssigkeit ausgestattet sein. Hierzu ist im Gehäuse 2 eine Wanne 9 für eine Reinigungsflüssigkeit (nicht dargestellt) vorgesehen, in die der Schweißbrenner 5 eingetaucht werden kann. Neben der Wanne 9 kann beispielsweise ein Nachfüllbehälter in einer Aufnahmevorrichtung 10 angeordnet werden, über den die Wanne 9 mit der Reinigungsflüssigkeit versorgt wird. Selbstverständlich kann der Nachfüllbehälter auch im Inneren des Gehäuses 2 angeordnet werden und die Reinigungsflüssigkeit über eine Pumpe in die Wanne 9 befördert werden, oder am Gehäuse 2 ein Anschluss angeordnet werden, über den die Wanne 9 extern mit der Reinigungsflüssigkeit versorgt wird.

Wie nun besser aus Fig. 2 ersichtlich, ist eine weitere, zweite Spule 11 angeordnet, die der ersten Spule 4 zugeordnet ist. Die beiden Spulen 4, 11 werden unabhängig voneinander von der Versorgungseinheit 7 mit elektrischer Energie beaufschlagt. Beispielsweise ist jede Spule 4, 11 derart dimensioniert, dass diese einen Durchmesser von 80mm, eine Höhe von 40mm und 120 Windungen eines Drahtes mit einem Querschnitt von 5mm² aufweisen. Die beiden Spulen 4, 11 sind axial übereinander angeordnet. Die Form der Spulen 4, 11 kann rund oder zylindrisch sein und durch eine Luftspule gebildet werden. Es muss sichergestellt sein, dass der Schweißbrenner 5, insbesondere die Gasdüse 6, in das Zentrum der Spulen 4, 11 positioniert werden kann, sodass beim Beaufschlagen der Spulen 4, 11 mit elektrischer Energie das erzeugte Magnetfeld auf den Schweißbrenner 5 einwirken kann.

Um die Spulen 4, 11 mit Energie zu versorgen, sind beide Spulen 4, 11 mit der Versorgungseinrichtung 7 verbunden, wobei jede Spule 4, 11 unter Zwischenschaltung eines Schaltelementes (nicht dargestellt) mit zumindest einem, insbesondere drei Kondensatoren 12, verbunden ist. Somit kann durch Aktivieren des Schaltelementes die in den Kondensatoren 12 geladene Energie an die Spulen 4, 11 geleitet werden. Damit die Kondensatoren 12 geladen werden können, sind diese direkt mit dem Ausgang eines kurzschlussfesten Transformators 13 verbunden, sodass beim Anlegen einer Spannung an die Primärseite des Transformators 13 diese auf die Sekundärseite übertragen wird und anschließend zum Laden der Kondensatoren 12 diese direkt in die Kondensatoren 12 eingespeist wird. Damit kann über den Transformator 13 eine entsprechende Energieumwandlung von der Primärseite zur Sekundärseite vorgenommen werden, sodass eine optimale Ladung der Kondensatoren 12 und gleichzeitig eine galvanische Trennung erreicht wird. Bevorzugt werden hierbei zwei bis fünf Kondensatoren 12, insbesondere drei Kondensatoren 12 pro Spule 4, 11 eingesetzt, wobei jeder Kondensator 12 beispielsweise eine Kapazität von 4700µF besitzt und für eine Spannung von 500V dimensioniert ist. Selbstverständlich können die beiden Spulen 4, 11 auch unterschiedlich dimensioniert werden.

Anstelle von Kondensatoren 12 kann auch eine direkte Versorgung der Spulen 4, 11 mit elektrischer Energie stattfinden, wobei hierzu die Leistungsversorgung der Spulen 4, 11 von einem getakteten Netzteil, insbesondere einer Inverterstromquelle, zur Verfügung gestellt wird.

Bevorzugt wird für die Reinigung zuerst die weitere Spule 11 mit elektrischer Energie versorgt, die gegenüber der Öffnung 3 angeordnet ist. Somit kann sich das Magnetfeld von der weiteren Spule 11 in Richtung der Öffnung 3, also zur ersten Spule 4 ausbreiten. Dabei können die beiden Spulen 4, 11 mit unterschiedlichen Leistungen beaufschlagt werden. Beispielsweise kann ein Verhältnis von 60:40, 70:30 oder 30:70, 40:60 gewählt werden. Um eine noch bessere Reinigung zu erzielen, ist es möglich, die Spulen 4, 11 mit zusätzlichen magnetischen Leitblechen (nicht dargestellt) auszustatten, um das Magnetfeld punktuell konzentriert zu verstärken und um das Magnetfeld über einen größeren Bereich auszugleichen und somit ein homogeneres Feld zu erreichen.

Weiters ist es vorteilhaft eine Kühlvorrichtung 14 für die Spulen 4, 11 im Gehäuse 2 anzuordnen, da zwischen den beiden Spulen 4, 11 beim Beaufschlagen von Energie ein Hitzestau entsteht, der abgeführt werden muss, um eine Beschädigung der Spulen 4, 11 zu vermeiden. Die Kühlvorrichtung 14 kann in einfachster Form durch entsprechende Kühlleitbleche 15 gebildet sein, sodass die Wärme zwischen den Spulen 4, 11 über die Kühlleitbleche 15 aufgenommen wird und von der Wärmequelle weggeleitet wird. Die Kühlleitbleche 15 werden dabei bevorzugt mit dem Gehäuse 2 verbunden, sodass die Wärme an das Gehäuse 2 abgeführt werden kann, wie dies in Fig. 2 schematisch dargestellt ist. Die Kühlvorrichtung 14 kann auch direkt in einer oder beiden Spulen 4, 11 integriert sein. Die Abführung der Wärme nach außen ist insofern wichtig, da aufgrund der großen elektromagnetischen Felder das Gehäuse 2 zur Abschirmung nach außen geschlossen ist und auch kein Schmutz ins Innere des Gehäuses 2 gelangen kann. Durch eine effiziente Wärmeabfuhr über das Gehäuse ist der Einsatz von Lüftern usw., die Schlitze im Gehäuse 2 benötigen, nicht notwendig. Das Gehäuse 2 kann somit ohne Zwangskühlung und Kühlungsöffnungen auskommen und ist somit von außen gegenüber Verschmutzungen geschützt. Ebenso wäre der Einsatz sogenannter Heat-Pipe's als Kühlvorrichtung 14 möglich, die zwischen den Spulen 4, 11 eingelegt bzw. mit den Spulen 4, 11 mitgewickelt werden können. Das freie Ende der Heat-Pipe's wird mit dem Gehäuse 2 verbunden, sodass die Wärme über die Heat-Pipe's an das Gehäuse 2 geleitet wird. Darüber hinaus kann die Kühlvorrichtung 14 für die Spulen 4, 11 auch durch ein Druckluftsystem gebildet werden, wobei am Gehäuse 2 ein Druckluftanschluss benötigt wird. Die Spulen 4, 11 können auch über ein flüssiges oder gasförmiges Medium gekühlt werden.

Zumindest eine Spule 4, 11 kann mit zumindest einem Temperatursensor ausgestattet sein, mit welchem die Leistung der Entladung ausgeregelt werden kann. Über den zumindest einen Temperatursensor kann die Temperaturentwicklung überwacht werden und beispielsweise über die zugeführte Leistung bzw. Energie auf die Temperaturentwicklung Einfluss genommen werden. Beispielsweise können die Spulen 4, 11 bei zu hoher Temperatur beim nächsten Reinigungsvorgang mit weniger Leistung versorgt werden, sodass eine geringere Temperaturentwicklung stattfindet. Weiters können die Temperatursensoren auch für die Kühlung verwendet werden, wobei hierzu bevorzugt eine aktive Kühlung, also eine regelbare Kühlvorrichtung 14, wie beispielsweise bei einer Druckluftkühlung, eingesetzt wird. Somit kann entsprechend der Temperaturentwicklung die Leistung der Kühlvorrichtung 14 erhöht oder verringert werden, sodass immer eine optimale Temperatur vorhanden ist. Die Kühlung wird also geregelt oder ein- und ausgeschaltet, wodurch die Kühlung nur dann durchgeführt wird, wenn sie auch notwendig ist.

Wesentlich ist, dass bei der Verwendung von zwei Spulen 4, 11 die Ansteuerung der Spulen 4, 11 über die Steuervorrichtung 8 entsprechend geregelt wird. Bevorzugt erfolgt für die Reinigung des Schweißbrenners 5 die Versorgung der beiden Spulen 4, 11 aufeinanderfolgend, das heißt, dass nach dem Beaufschlagen der weiteren Spule 11 mit Energie zum Erzeugen eines magnetischen Feldes 17 die erste Spule 4 zu einem vorgegebenen Zeitpunkt mit Energie zur Erzeugung eines magnetischen Feldes 16 beaufschlagt wird, wobei jedoch die weitere Spule 11 auch nach dem Aktivieren der ersten Spule 4 mit Energie versorgt wird. Somit wird erreicht, dass die beiden Magnetfelder 16, 17 der beiden Spulen 4, 11 zu einem gemeinsamen Magnetfeld verschmelzen. Dies ist schematisch in Fig. 3 dargestellt, wobei auf der Ordinate T das Magnetfeld und auf der Abszisse l die Länge bzw. der Weg axial entlang der Spulen 4, 11 aufgetragen ist. Bevorzugt wird 1ms bis 3ms, insbesondere 1,5ms nach der Versorgung der weiteren Spule 11 mit Energie, die erste Spule 4 mit Energie versorgt.

Üblicherweise bilden sich die Magnetfelder 16, 17 nur in einem bestimmten Bereich der Spulen 4, 11 aus, sodass beim Einsatz von nur einer Spule 4, wie es aus dem Stand der Technik bekannt ist, nur in diesem Bereich ein starkes Magnetfeld auftritt und nur in diesem Bereich eine gute Reinigung erzielt wird. Um bei dem aus dem Stand der Technik bekannten Reinigungsgerät eine gute Reinigung zu erzielen, müsste der Schweißbrenner 5 unterschiedlich weit in die Spule 4 hineingefahren werden, sodass über die gesamte Gasdüse 6 ein guter Reinigungseffekt erzielt würde.

Da nunmehr zwei Spulen 4, 11 eingesetzt werden, bilden sich nunmehr zwei unterschiedliche Bereiche bzw. Magnetfelder 16, 17 aus, die jedoch aufgrund der geringen Distanz und aufgrund einer zeitlich gemeinsamen Energiebeaufschlagung zu einem gemeinsamen Magnetfeld verschmelzen. Damit kann der Reinigungsbereich wesentlich vergrößert werden, da das Magnetfeld über einen größeren Bereich wirkt. Somit kann der Schweißbrenner 5, insbesondere die Gasdüse 6, bei einem Reinigungsprozess vollständig gereinigt werden und braucht nicht mehr, wie aus dem Stand der Technik bekannt, unterschiedlich tief in der Spule 4 positioniert werden.

Weiters können die Spulen 4, 11 über entsprechende Schaltelemente mit zusätzlichen Windungen erweitert werden, sodass über die Steuervorrichtung 8, wenn notwendig, die entsprechenden Schaltelemente angesteuert werden können, sodass die Windungszahl der Spulen 4, 11 erhöht oder durch entsprechendes Deaktivieren der Schaltelemente die Windungszahl der Spulen 4, 11 verringert werden kann. Damit kann eine Anpassung des Magnetfeldes an verschiedene Schweißbrenner 5 vorgenommen werden oder die Ausbildung des Magnetfeldes beeinflusst werden.

## Patentansprüche

1. Reinigungsvorrichtung (1) zum Reinigen von Schweißbrennern (5) mit zumindest zwei Spulen (4, 11) und einer Öffnung (3) zur Einbringung des Schweißbrenners (5) zur elektromagnetischen Reinigung desselben, einer mit den Spulen (4, 11) verbundenen Versorgungseinrichtung (7) und gegebenenfalls mit einer Vorrichtung zum Aufbringen von Reinigungsflüssigkeit an die Spitze des Schweißbrenners (5), wobei bevorzugt alle Komponenten in einem gemeinsamen Gehäuse (2) angeordnet und von einer Steuervorrichtung (8) geregelt sind, **dadurch gekennzeichnet, dass** für die Reinigung des Schweißbrenners (5) die Spulen (4, 11) unabhängig voneinander von der Versorgungseinrichtung (7) mit elektrischer Energie versorgbar sind, und dass eine Kühlvorrichtung (14) zur Kühlung der Spulen (4, 11) angeordnet ist.

2. Reinigungsvorrichtung (1) nach Anspruch 1, **dadurch gekennzeichnet, dass** die Spulen (4, 11) unter Zwischenschaltung eines Schaltelementes mit einem oder mehreren Kondensatoren (12) der Versorgungseinrichtung (7) verbunden sind.

3. Reinigungsvorrichtung (1) nach Anspruch 2, **dadurch gekennzeichnet, dass** die Kondensatoren (12) direkt mit dem Ausgang eines kurzschlussfesten Transformators (13) verbunden sind.

4. Reinigungsvorrichtung (1) nach einem der Ansprüche 1 bis 3, **dadurch gekennzeichnet, dass** die Kühlvorrichtung (14) zwischen den Spulen (4, 11) angeordnet ist.

5. Reinigungsvorrichtung (1) nach einem der Ansprüche 1 bis 3, **dadurch gekennzeichnet, dass** die Kühlvorrichtung (14) in zumindest einer Spule (4, 11) integriert ist.

6. Reinigungsvorrichtung (1) nach einem der Ansprüche 1 bis 5, **dadurch gekennzeichnet, dass** die Kühlvorrichtung (14) durch Kühlleitbleche (15) oder Wärmerohre, insbesondere Heat-Pipe's, gebildet ist, die mit dem Gehäuse (2) verbunden sind.

7. Reinigungsvorrichtung (1) nach einem der Ansprüche 1 bis 6, **dadurch gekennzeichnet, dass** zumindest eine Spule (4, 11) mit zumindest einem Temperatursensor ausgestattet ist.

8. Reinigungsvorrichtung (1) nach einem der Ansprüche 1 bis 7, **dadurch gekennzeichnet, dass** das Gehäuse (2) zur Abschirmung der von den Spulen (4, 11) erzeugten elektromagnetischen Felder (16, 17) im Wesentlichen geschlossen ist.

9. Reinigungsvorrichtung (1) nach einem der Ansprüche 1 bis 8, **dadurch gekennzeichnet, dass** das Gehäuse (2) ohne Zwangskühlung und Kühlungsöffnungen auskommt, und abgedichtet ist, sodass das Innere des Gehäuses (2) vor Verschmutzungen geschützt ist.

10. Reinigungsvorrichtung (1) nach einem der Ansprüche 1 bis 9, **dadurch gekennzeichnet, dass** die Spulen (4, 11) zusätzliche magnetische Leitbleche zur punktuellen Konzentration, Verstärkung und allenfalls Homogenisierung des Magnetfelds aufweisen.

11. Verfahren zum Reinigen von Schweißbrennern (5), bei dem eine Spitze des Schweißbrenners (5) zur berührungslosen Entfernung von Verunreinigungen einem über zumindest zwei Spulen (4, 11) erzeugten elektromagnetischen Feld (16) ausgesetzt wird, wobei gegebenenfalls vor der Reinigung auf die Spitze des Schweißbrenners (5) Reinigungsflüssigkeit aufgebracht wird, **dadurch gekennzeichnet, dass** die erste Spule (4) zum Erzeugen eines elektromagnetischen Feldes (16) nach der zumindest einen weiteren Spule (11) mit elektrischer Energie versorgt wird.

12. Reinigungsverfahren nach Anspruch 11, **dadurch gekennzeichnet, dass** die erste Spule (4) mit elektrischer Energie versorgt wird, während die Versorgung der zumindest einen weiteren Spule (11) mit elektrischer Energie aufrecht erhalten bleibt.

13. Verfahren nach Anspruch 11 oder 12, **dadurch gekennzeichnet, dass** die erste Spule (4) 1ms bis 3ms, insbesondere 1,5ms, nach der zumindest einen weiteren Spule (11) mit elektrischer Energie versorgt wird.

## Claims

1. A cleaning apparatus (1) for cleaning a welding torch (5), including at least two coils (4, 11) and an opening (3) for introducing the welding torch (5) for the electromagnetic cleaning thereof, a supply device (7) connected with the coils (4, 11), and optionally a device for applying a cleaning fluid to the tip of the welding torch (5), wherein preferably all components are arranged in a common housing (2) and controlled by a control device (8), **characterized in that**, for the cleaning of the welding torch (5), the coils (4, 11) are suppliable with electrical energy by the supply device (7) independently of one another, and that a cooling device (14) is provided for cooling the coils (4, 11).

2. A cleaning apparatus (1) according to claim 1, **characterized in that** the coils (4, 11) are connected with one or several capacitors (12) of the supply device (7) via an interposed switching element.

3. A cleaning apparatus (1) according to claim 2, **characterized in that** the capacitors (12) are directly connected to the output of a short-circuit-resistant transformer (13).

4. A cleaning apparatus (1) according to any one of claims 1 to 3, **characterized in that** the cooling device (14) is arranged between the coils (4, 11).

5. A cleaning apparatus (1) according to any one of claims 1 to 3, **characterized in that** the cooling device (14) is integrated in at least one of the coils (4, 11).

6. A cleaning apparatus (1) according to any one of claims 1 to 5, **characterized in that** the cooling device (14) is formed by cooling baffles (15) or, in particular, heat pipes, which are connected with the housing (2).

7. A cleaning apparatus (1) according to any one of claims 1 to 6, **characterized in that** at least one of the coils (4, 11) is equipped with at least one temperature sensor.

8. A cleaning apparatus (1) according to any one of claims 1 to 7, **characterized in that** the housing (2) is substantially closed for shielding off the electromagnetic fields (16, 17) generated by the coils (4, 11).

9. A cleaning apparatus (1) according to any one of claims 1 to 8, **characterized in that** the housing (2) does not require forced cooling and cooling openings and is sealed to protect the interior of the housing (2) from contaminants.

10. A cleaning apparatus (1) according to any one of claims 1 to 9, **characterized in that** the coils (4, 11) comprise additional magnetic baffles for the selective concentration, intensification and, optionally, homogenization of the magnetic field.

11. A method for cleaning a welding torch (5), in which a tip of the welding torch (5) is exposed to an electromagnetic field (16) generated by at least two coils (4, 11) for the contactless removal of contaminants, wherein a cleaning fluid is optionally applied to the tip of the welding torch (5) prior to cleaning, **characterized in that** the first coil (4) for generating an electromagnetic field (16) is supplied with electrical energy after the at least one further coil (11).

12. A method for cleaning according to claim 11, **characterized in that** the first coil (4) is supplied with electrical energy while the supply of the at least one further coil (11) with electrical energy is being maintained.

13. A method according to claim 11 or 12, **characterized in that** the first coil (4) is supplied with electrical energy 1-3ms, in particular 1.5ms, after the at least one further coil (11).

## Revendications

1. Dispositif de nettoyage (1) pour le nettoyage de chalumeaux de soudure (5) avec au moins deux bobines (4, 11) et une ouverture (3) pour l'introduction du chalumeau de soudure (5) pour un nettoyage électromagnétique de celui-ci, un dispositif d'alimentation (7) relié avec les bobines (4, 11) et, le cas échéant, avec un dispositif d'application d'un liquide de nettoyage sur la pointe du chalumeau de soudure (5), tous les composants étant disposés de préférence dans un boîtier commun (2) et étant régulés par un dispositif de commande (8), **caractérisé en ce que**, pour le nettoyage du chalumeau de soudure (5), les bobines (4, 11) peuvent être alimentées indépendamment l'une de l'autre par le dispositif d'alimentation (7) en énergie électrique et **en ce qu'**un dispositif de refroidissement (14) est prévu pour le refroidissement des bobines (4, 11).

2. Dispositif de nettoyage (1) selon la revendication 1, **caractérisé en ce que** les bobines (4, 11) sont reliées avec un ou plusieurs condensateurs (12) du dispositif d'alimentation (7) par l'intermédiaire d'un élément de commutation.

3. Dispositif de nettoyage (1) selon la revendication 2, **caractérisé en ce que** les condensateurs (12) sont reliés directement avec la sortie d'un transformateur (13) protégé contre les courts-circuits.

4. Dispositif de nettoyage (1) selon l'une des revendications 1 à 3, **caractérisé en ce que** le dispositif de refroidissement (14) est disposé entre les bobines (4, 11).

5. Dispositif de nettoyage (1) selon l'une des revendications 1 à 3, **caractérisé en ce que** le dispositif de refroidissement (14) est intégré dans au moins une bobine (4, 11).

6. Dispositif de nettoyage (1) selon l'une des revendications 1 à 5, **caractérisé en ce que** le dispositif de refroidissement (14) est constitué de déflecteurs de refroidissement (15) ou de tubes thermiques, plus particulièrement des « heat pipe », qui ont reliés avec le boîtier (2).

7. Dispositif de nettoyage (1) selon l'une des revendications 1 à 6, **caractérisé en ce qu'**au moins une bobine (4, 11) est équipée d'au moins un capteur de température.

8. Dispositif de nettoyage (1) selon l'une des revendications 1 à 7, **caractérisé en ce que** le boîtier (2) est essentiellement fermé pour la protection contre les champs électromagnétiques (16, 17) générés par les bobines (4, 11).

9. Dispositif de nettoyage (1) selon l'une des revendications 1 à 8, **caractérisé en ce que** le boîtier (2) est réalisé sans refroidissement forcé ni ouvertures de refroidissement et est étanchéifié de façon à ce que l'intérieur du boîtier (2) soit protégé de tout encrassement.

10. Dispositif de nettoyage (1) selon l'une des revendications 1 à 9, **caractérisé en ce que** les bobines (4, 11) comprennent en outre des déflecteurs magnétiques pour la concentration ponctuelle, l'amplification et, le cas échéant, l'homogénéisation, du champ magnétique.

11. Procédé de nettoyage de chalumeaux de soudure (5), dans lequel une pointe du chalumeau de soudure (5) est exposée, pour l'élimination sans contact des impuretés, à un champ électromagnétique (16) généré par au moins deux bobines (4, 11), le cas échéant, avant le nettoyage, un liquide de nettoyage étant appliqué sur la pointe du chalumeau de soudure (5), **caractérisé en ce que** la première bobine (4) est alimentée en énergie électrique pour la génération d'un champ électromagnétique (16) après l'au moins une bobine supplémentaire (11).

12. Procédé de nettoyage selon la revendication 11, **caractérisé en ce que** la première bobine (4) est alimentée en énergie électrique tandis que l'alimentation de l'au moins une bobine supplémentaire (11) en énergie électrique reste inchangée.

13. Procédé de nettoyage selon la revendication 11 ou 12, **caractérisé en ce que** la première bobine (4) est alimentée en énergie électrique 1 ms à 3 ms, plus particulièrement 1,5 ms, après l'au moins une bobine supplémentaire (11).
